# EUROPÄISCHE PATENTSCHRIFT

(11) **EP 0 517 750 B1**
(45) Veröffentlichungstag und Bekanntmachung des Hinweises auf die Patenterteilung: **28.06.1995**
(21) Anmeldenummer: 91904674.8
(22) Anmeldetag: 20.02.1991
(51) Int. Cl.: G21C 3/322

(54) **SIEDEWASSERKERNREAKTOR UND KERNREAKTORBRENNELEMENT FÜR DIESEN SIEDEWASSERKERNREAKTOR**
BOILING WATER NUCLEAR REACTOR AND FUEL ELEMENT THEREFOR
REACTEUR NUCLEAIRE A EAU BOUILLANTE ET ELEMENT COMBUSTIBLE POUR CE REACTEUR NUCLEAIRE A EAU BOUILLANTE

(30) Priorität: 28.02.1990 DE 4006264
(43) Veröffentlichungstag der Anmeldung: 16.12.1992
(73) Patentinhaber: SIEMENS AKTIENGESELLSCHAFT, 80333 München (DE)
(72) Erfinder: KRAEMER, Wendelin, D-6000 Frankfurt/Main (DE); UEBELHACK, Walter, D-6272 Niederhausen (DE); FRÖMEL, Gustav, D-8520 Erlangen (DE)
(86) Internationale Anmeldenummer: DE9100133
(87) Internationale Veröffentlichungsnummer: WO9113442

(56) Entgegenhaltungen:
- EP-A- 0 291 748
- DE-A- 3 519 421
- DE-U- 8 802 565
- US-A- 3 886 038
- US-A- 4 725 403

## Beschreibung

### Siedewasserkernreaktor und Kernreaktorbrennelement für diesen Siedewasserkernreaktor

Die Erfindung betrifft einen Siedewasserkernreaktor entsprechend dem Gattungsbegriff des Patentanspruchs 1 und ein Brennelement für diesen Siedewasserkernreaktor.

Die im Gattungsbegriff des Anspruchs 1 angegebenen Strukturen von Brennelementen für Siedewasserreaktoren sind üblich und werden auch bei der Erfindung verwendet. Sie sind daher Bestandteil des erfindungsgemäßen Brennelementes und des Reaktors. Im Reaktorkern des Siedewasserkernreaktors tritt das flüssige Kühlmittel am Unterende (Eintrittsende) in den Brennelementkasten ein und verläßt es als Flüssigkeit/Dampf-Gemisch am Oberende (Austrittsende) des Kastens.

Da im oberen Teil des Brennelementes ein zunehmender Teil des Kühlmittels, das gleichzeitig als Moderator dient, als Dampf vorliegt, muß die vertikale Strömung im Reaktorkern so kanalisiert werden, daß auch dort genügend Moderator vorhanden ist. Hierzu können Rohre ("Wasserrohre") für das flüssige Kühlmittel dienen, die einen oder mehrere Brennstäbe ersetzen. Ein derartiges Wasserrohr kann auch einen größeren Querschnitt als ein einzelner Brennstab besitzen, so daß es sich über den Querschnitt von mehreren Gittermaschen erstreckt, oder einen anderen (z.B. kreuzförmigen) Querschnitt aufweisen. Auch die Kastenwände dienen der Kanalisierung der vertikalen Strömung und müssen insbesondere verhindern, daß sich durch eine unkontrollierte Horizontalströmung an den Absorberelementen Kühlmitteldampf ansammelt, der einen geordneten Ablauf und die Steuerung der Reaktionen im Reaktor stören würde. Die Absorberelemente sind dabei außerhalb der Brennelemente in den Zwischenräumen zwischen den einzelnen Brennelementen angeordnet.

Normalerweise befindet sich auf der Außenfläche der Brennstäbe ein Wasserfilm, der die Wärme, die in den nuklearbeheizten Brennstäben entsteht und im oberen Teil des Brennelementes zum Verdampfen des flüssigen Kühlmittels führt, in das Innere der Zwischenräume zwischen benachbarten Brennstäben überträgt. Diese Zwischenräume bilden dabei Strömungsunterkanäle für die vertikale Strömung im Reaktorkern. Wird die Leistung des Brennelementes zu hoch, so kann dieser Wasserfilm abreißen oder austrocknen. Man spricht dann von einem Siedeübergang oder dryout an den Stäben. Dadurch wird der Wärmeübergang von den Stäben zu dem Kühlmittel verschlechtert und unerwünschte lokale Überhitzungen der Brennstäbe treten auf.

Andererseits liegt auch in dem oberen Teil des Brennelementes noch ein erheblicher Teil des Kühlmittels in Form von Flüssigkeitströpfchen und einem an den und gegebenenfalls einem Wasserrohr Kastenwänden entlang kriechenden Flüssigkeitsfilm vor, der zur Verbesserung der Kühlung bei hohen Leistungen genutzt werden könnte. Daher ist in der US-A- 4.749.543 vorgeschlagen, an den Innenseiten der Kastenwände Nuten einzuarbeiten, an denen ein Flüssigkeitsfilm verwirbelt wird ("flow tripper"). Nach DE-U 88 025 65.9 sind an der dem Kühlmittelstrom abgewandten Seite eines Abstandhalters bei einem Siedewasser-Brennelement mit zentralem Wasserrohr Leitschaufeln angebracht, die sich verjüngen und von der Wand des Wasserrohres aus schräg in die Zwischenräume zwischen den benachbarten Brennstäben hineinragen. Diese Leitschaufeln lenken den Flüssigkeitsfilm an der Wasserrohr-Wand ab und vermischen ihn turbulent mit dem zwischen den Brennstäben strömenden, heißen Flüssigkeit/Dampf-Gemisch des Kühlmittels.

Derartige Turbulenzen erhöhen aber den Druckverlust in der vertikalen Strömung und können dadurch die angestrebten Vorteile einer verbesserten Kühlung weitgehend aufheben oder sogar überwiegen.

Bei Druckwasser-Reaktoren dagegen wird durch einen hohen Druck im Reaktorkern die Entstehung eines Flüssigkeit-Dampf-Gemisches verhindert, so daß auch am heißen Austrittsende des Brennelementes ausreichend flüssiger Moderator zur Verfügung steht und ein Siedeübergang an den Brennstäben nicht zu befürchten ist. Ein Brennelementkasten, der nur unnötigen Materialaufwand und zusätzliche Neutronenabsorption bedeuten würde, ist nicht vorhanden und die Absorberelemente sind möglichst gleichmäßig über den Querschnitt des Brennelementes verteilt.

Dadurch liegen ganz andere Strömungsverhältnisse vor. Insbesondere kann sich eine Horizontalströmung zwischen benachbarten Strömungsunterkanälen eines Brennelementes und auch zwischen benachbarten Brennelementen selbst ausbilden.

Eine derartige Horizontalströmung wird bei Druckwasser-Reaktoren sogar für wünschenswert gehalten, da dadurch ein Temperaturausgleich zwischen heißeren und kühleren Bereichen des Brennelementes erfolgt und die Kühlung verbessert wird.

Eine derartige Horizontalströmung, die bei einem Siedewasser-Brennelement jeweils durch die Kastenwände weitgehend unterbunden und jedenfalls von den Absorberelementen zwischen den Brennelementen ferngehalten wird, kann daher bei einem Druckwasser-Brennelement durch entsprechende Einbauten oder Schaufeln in den Strömungsunterkanälen erzeugt werden. Diese Schaufeln können an den Stegen von Abstandhaltern, die ohnehin zur Fixierung des gegenseitigen Abstandes der Brennstäbe erforderlich sind, oder an den Stegen eigener Mischgitter angeordnet sein, wie dies z.B. in Fig. 1 und Fig. 2 der DE-A 15 64 697 gezeigt ist. Dabei kommt es zu einer Zirkularströmung um die einzelnen Brennstäbe, durch die alle an einem Brennstab angrenzenden Strömungsunterkanäle miteinander verbunden werden. Die Überlagerung dieser einzelnen Zirkularströmungen führt dann zu Horizontalströmen, die quer durch das ganze Brennelement gehen. Die gleichen Zirkularströmungen bilden sich auch bei den Gitterstrukturen von Druckwasser-Kernreaktoren nach den Figuren 1, 8 und 9 der US-A 4.224.107 aus.

In der DE-A 2 157 742 ist vorgeschlagen, in jedem Strömungsunterkanal eines Druckwasserreaktors vier Schaufeln propellerartig anzuordnen, um eine Turbulenz in den Strömungsunterkanälen und einen höheren Wärmeübergang an den Brennstäben zu erzeugen. In der US-A-4.725.403 ist zum gleichen Zweck in den Strömungsunterkanälen jeweils eine Zusatzhülse an den Abstandhalter-Stegen angebracht, die an ihrer dem Kühlmittelstrom abgewandten Seite zwei Schaufeln trägt, die so zueinander geneigt sind, daß dem durch die Zusatzhülse strömenden Kühlmittel des Druckwasser-Reaktors ein Drall eingeprägt wird. Nach DE-A-35 19 421 ist die Zusatzhülse selbst auch spiralförmig in sich gewunden, und trägt vier derartige Schaufeln, die in Richtung des gewünschten Dralles nach außen gebogen sind.

Derartige Schaufeln von Druckwasserreaktoren stellen jedoch einen erheblichen Strömungswiderstand dar und bewirken daher einen Druckabfall mit einer Verschlechterung der Ausnutzung des Reaktors, so daß die erwünschte Verbesserung praktisch nicht auftritt.

Sofern daher bei Druckwasserreaktoren überhaupt derartige Schaufeln zur Erzeugung einer Horizontalströmung verwendet werden, muß insbesondere darauf ceachtet werden, daß die an derartigen Schaufeln unvermeidlichen Turbulenzen der Vertikalströmung und der damit verbundene Druckverlust möglichst klein gehalten werden.

Nach der EP-A-0 291 748 entsteht ein besonders niedriger Druckverlust an den Schaufeln eines gitterförmigen Abstandhalters, wenn die Schaufeln an den Kreuzungspunkten paarweise so zueinander gebogen und miteinander verschweißt werden, daß in jedem Strömungskanal ein Paar diagonal angeordneter, auf die Brennstäbe gerichteter Zwickel entsteht. Dadurch entstehen Drallströmungen, die sich zu diagonal durch das Druckwasser-Brennelement verlaufenden Horizontalströmungen zusammensetzen.

Bei Siedewassereaktoren wird eine Horizontalströmung, falls sie sich ausbilden sollte, ohnehin an den Kastenwänden unterbrochen, so daß nicht zu erwarten ist, daß durch die Verwendung von Schaufeln zur Erzeugung einer Horizontalströmung eine wesentliche Verbesserung erreichbar ist. Vielmehr ist gerade bei Siedewassereaktoren der Druckverlust in den Strömungsunterkanälen besonders kritisch.

Der Erfindung liegt die Aufgabe zugrunde, den im Flüssigkeit-Dampf-Gemisch enthaltenen flüssigen Anteil des Kühlmittels zu nutzen, um die Leistung des Brennelements zu steigern und das Auftreten eines Siedeübergangs zu vermeiden.

Es hat sich überraschenderweise gezeigt, daß Schaufeln oder ähnliche Strömungsleitflächen, die bei Druckwasserreaktoren zur Erzeugung und Verstärkung von horizontalen Strömungen verwendet werden und möglichst geringe Turbulenzen in der Vertikalströmung erzeugen sollen, bei Siedewasserreaktoren gerade wegen dieser Turbulenzen so vorteilhaft sind, daß der Nachteil des erhöhten Druckverlustes in Kauf genommen werden kann.

Dabei spielen Horizontalströmungen nur eine untergeordnete Rolle, da sie durch die Kastenwände umgelenkt und von den Absorberelementen ferngehalten werden müssen.

Daher wird die genannte Aufgabe durch einen Siedewasser-Kernreaktor der eingangs erwähnten Art gelöst, der gemäß der Erfindung die Merkmale des kennzeichnenden Teils des Anspruchs 1 aufweist. Ein Kernbrennelement für diesen Siedewasser-Kernreaktor kann vorteilhaft entsprechend den Ansprüchen 6 oder 8 ausgebildet sein.

Der Drall, der durch die an der Kühlmittelabströmseite des Gitters im Querschnitt des Brennelementkastens angebrachten Schaufeln erzeugt wird, schleudert die im Zweiphasengemisch des Kühlmittels befindlichen Wassertröpfchen aus dem Strömungsunterkanal in Richtung auf die Außenfläche der Brennstäbe. Dort bilden sie auch bei erhöhter Leistung des Kernreaktorbrennelementes einen Wasserfilm, der einen Siedeübergang bzw. Dryout an den Stäben mit einem dadurch entstehenden schlechten Wärmeübergang verhindert.

Die weiteren Patentansprüche sind auf vorteilhafte Weiterbildungen gerichtet, durch die zur Steigerung der zulässigen Leistung des Kernreaktorbrennelementes der Wasserfilm auf der Außenoberfläche der Brennstäbe in verstärktem Umfang gebildet wird.

Die Erfindung und ihre Vorteile seien anhand der Zeichnung an Ausführungsbeispielen näher erläutert. Es zeigen:
FIG 1 schematisch einen Siedewasserkernreaktor,
FIG 2 schematisch in Längsansicht ein erfindungsgemäßes Kernreaktorbrennelement für einen Siedewasserkernreaktor nach FIG 1.
FIG 3 und 4 eine Draufsicht und Seitenansicht auf einen Ausschnitt aus einem gitterförmigen Abstandhalter in einem erfindungsgemäßen Kernreaktorbrennelement nach FIG 2,
FIG 5 eine Aufsicht auf eine andere Ausführungsform des gitterförmigen Abstandhalters,
FIG 6 und 7 eine Draufsicht auf einen Ausschnitt aus zwei weiteren Ausführungsformen eines gitterförmigen Abstandhalters in einem erfindungsgemäßen Kernreaktorbrennelement nach FIG 2,
FIG 8 ein Detail des Abstandhalters nach FIG 7,
FIG 9 eine Aufsicht auf einen Querschnitt eines Brennelements,
FIG 10 einen Detail-Querschnitt durch einen anderen Abstandhalter nach der Erfindung,
FIG 11 einen Längsschnitt entsprechend der strichpunktierten Linie XI-XI in FIG 10.
FIG 12 in perspektivischer Ansicht ein Einzelteil am gitterförmigen Abstandhalter nach FIG 5 und 6.

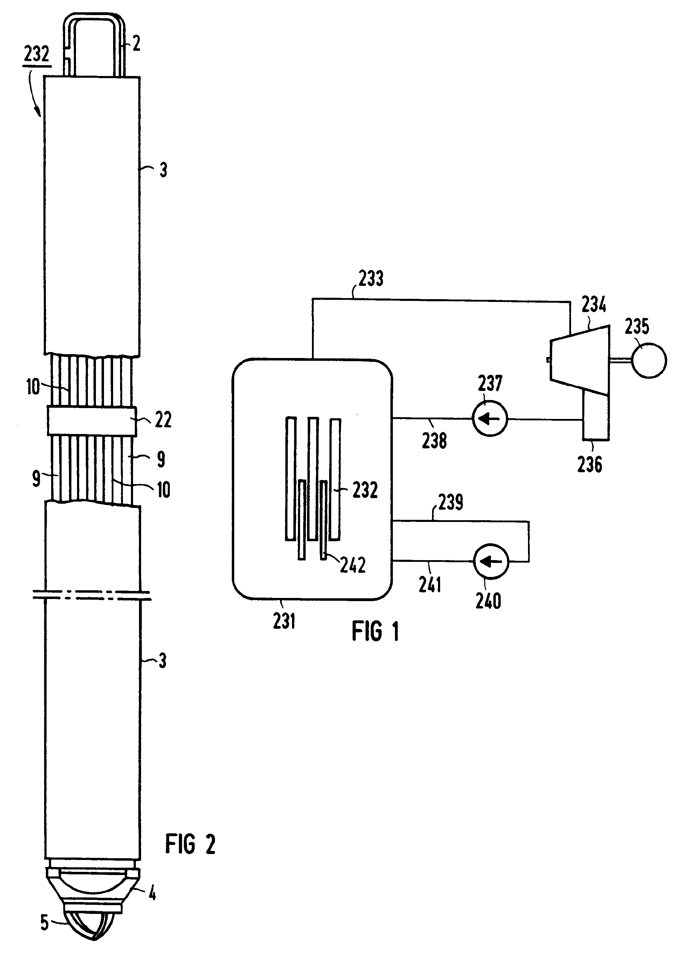

Der Siedewasserkernreaktor nach FIG 1 hat einen Druckbehälter 231, in dem sich ein Reaktorkern mit vertikal angeordneten Kernreaktorbrennelementen 232 entsprechend den Figuren 2 bis 7 befindet, zwischen denen Absorberelemente 242 angeordnet sind, die zur Steuerung des Reaktors in dem Zwischenraum zwischen den Brennelementen eingefahren oder daraus herausgefahren werden. Ein Austritt 233 für Wasserdampf oben am Druckbehälter 231 ist an einer Dampfturbine 234 angeschlossen, die einen elektrischen Generator 235 antreibt. Ein der Dampfturbine 234 zugeordneter Kondensator 236 ist über eine Speisewasserpumpe 237 an einem Speisewassereintritt 238 seitlich oben am Druckbehälter 231 angeschlossen. Diese Speisewasserpumpe 237 pumpt kondensierten Dampf der Dampfturbine 234 als Speisewasser zurück in den Druckbehälter 231.

Der Druckbehälter 231 älterer Siedewasserreaktoren weist ferner unterhalb des Speisewassereintrittes 238 einen Kühlmittelaustritt 239 seitlich zum Reaktorkern mit den Kernreaktorbrennelementen 232 und einen Kühlmitteleintritt 241 unterhalb dieses Reaktorkerns auf. Eine an Kühlmittelaustritt 239 und Kühlmitteleintritt 241 angeschlossene Kühlmittelpumpe 240 pumpt ständig Wasser über den Kühlmittelaustritt 239 aus dem Druckbehälter 231 heraus und über den Kühlmitteleintritt 241 wieder in den Druckbehälter 231 hinein, so daß eine ständige Kühlmittelströmung durch den Reaktorkern und damit in Längsrichtung durch die Kernreaktorbrennelemente 232 ausgehend vom Boden des Druckbehälters 231 gewährleistet ist. In moderneren Reaktoren ist diese Pumpe 240 im Inneren des Druckbehälters angeordnet.

Ein Kernreaktorbrennelement 232 nach Fig. 2 für einen Siedewasserkernreaktor nach FIG 1 weist einen nicht näher erkennbaren Brennelementkopf mit einem Haltegriff 2 auf der Oberseite einer quadratischen Gitterplatte auf. Auf der Oberseite dieser quadratischen Gitterplatte befinden sich ferner zwei oder vier ebenfalls nicht erkennbare Stehbolzen, auf denen ein dem Kernreaktorbrennelement zugeordneter langgestreckter Brennelementkasten 3 aus Blech aus einer Zirkoniumlegierung mit zwei oder vier nicht sichtbaren Querstreifen ebenfalls aus Blech aus einer Zirkoniumlegierung ruht, die in zwei oder vier Ecken innen im Brennelementkasten 3 an dessen Oberende angebracht sind. Jeder dieser Querstreifen ist mit dem betreffenden Stehbolzen verschraubt. Der Brennelementkasten 3 hat quadratischen Querschnitt und ist an beiden Enden offen. Die Gitterplatte selbst ist mit einer Vielzahl von Strömungsdurchführungen in Längsrichtung des Kernreaktorbrennelementes 232 versehen, durch die Kühlmittel im Reaktorkern des Siedewasserkernreaktors hindurchströmt. Diese Gitterplatte ist rechtwinklig zur Längsrichtung des Kernreaktorbrennelementes 232. Die Seitenwände des Brennelementkastens 3 schließen das Brennelement seitlich ab.

Das Kernreaktorbrennelement nach FIG 2 ist ferner mit einem Brennelementfuß 4 versehen, der ebenfalls eine verdeckte und nicht erkennbare quadratische Gitterplatte aufweist. Auch diese quadratische Gitterplatte hat eine Vielzahl von Strömungsdurchführungen in Längsrichtung des Kernreaktorbrennelementes 232 für Kühlmittel im Reaktorkern des Siedewasserkernreaktors. Auf der Unterseite ist die Gitterplatte des Brennelementfußes 4 mit einem zur Gitterplatte offenen Paßorgan 5 versehen, das in eine Paßöffnung an einer im Reaktorkern des Siedewasserkernreaktors befindlichen sogenannten unteren Kerngitterplatte eingesetzt ist. Am Oberende ist das Kernreaktorbrennelement 232 in einer Masche eines sogenannten oberen Kerngitters im Reaktorkern des Siedewasserkernreaktors fixiert.

Das Kernreaktorbrennelement 232 nach FIG 2 weist ferner eine Reihe als Haltestäbe 9 für Kopfteil und Fußteil 4 des Kernreaktorbrennelementes 232 ausgebildete, mit Kernbrennstoff gefüllte Brennstäbe auf. Diese Haltestäbe 9 sind in die Gitterplatte des Brennelementfußes 4 eingeschraubt und durchgreifen die Gitterplatte des Brennelementkopfes und sind dort mit einer an der Oberseite der Gitterplatte befindlichen Mutter an der Gitterplatte angeschraubt.

Weitere mit Kernbrennstoff gefüllte Brennstäbe 10 sind mit ihren Enden lose in Durchführungen in den Gitterplatten von Kopfteil und Fußteil 4 des Kernreaktorbrennelementes eingesetzt. Auf ihren Oberenden sitzen als Schraubenfedern ausgebildete Niederhaltefedern, die Druckfedern sind und sich jeweils am Brennstab 10 einerseits und an der Unterseite der Gitterplatte des Brennelementkopfes andererseits abstützen.

Das Kernreaktorbrennelement 232 nach FIG 2 weist schließlich zwischen dem Brennelementkopf und dem Brennelementfuß mehrere quadratische gitterförmige Abstandhalter auf, die sich in einem Querschnitt des Brennelementkastens 3 befinden, mit den quadratischen Gitterplatten von Kopfteil und Fußteil 4 fluchten und von denen ein gitterförmiger Abstandhalter 22 in FIG 1 erkennbar ist. Die anderen gitterförmigen Abstandhalter sind genauso ausgebildet wie der Abstandhalter 22, sind aber durch die Seitenwände des Brennelementkastens 3 genauso wie die Gitterplatte des Kopfteils und die Gitterplatte des Fußteils 4 verdeckt und daher nicht sichtbar.

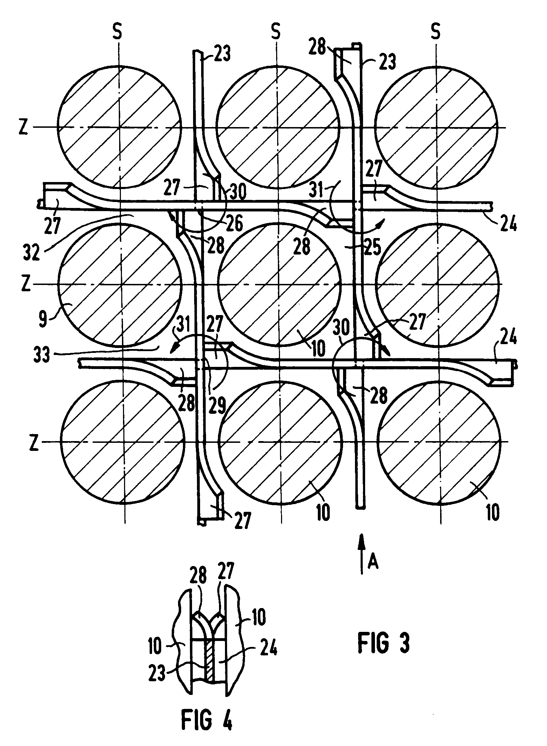

Die Draufsicht nach FIG. 3 zeigt im Ausschnitt die Kühlmitte-abströmseite eines gitterförmigen Abstandhalters 22, der aus einer Nickel-Chrom-Eisenlegierung besteht. Diese Kühlmittelabströmseite ist dem Brennelementkopf des Kernreaktorbrennelementes 232 zugewandt. Der gitterförmige Abstandhalter 22 weist zwei Gruppen flacher, ebener Stege 23 und 24 auf, die sich in einem Querschnitt des Brennelementkastens 3 und damit an einem Querschnitt des Kernreaktorbrennelementes 232 befinden. Die Stege 23 ("Querstege") der einen Gruppe und die Stege 24 ("Längsstege") der anderen Gruppe durchsetzen sich rechtwinkelig. Der Abstand zweier Stege 23 der einen Gruppe ist gleich dem Abstand zweier Stege 24 der anderen Gruppe. Dementsprechend bilden die Stege 23 und 24 flächengleiche quadratische Maschen 25, die sich in Kreuzungsstellen von äquidistanten, zueinander parallelen Längsreihen ("Zeilen Z") mit zueinander parallelen äquidistanten Querreihen ("Spalten S") befinden. Durch jede quadratische Masche 25 ist ein Haltestab 9 oder ein Brennstab 10 geführt. An den Stegen 23 und 24 befinden sich innerhalb der Maschen 25 nicht dargestellte Federn und Noppen, die für eine kraftschlüssige Halteverbindung von Haltestab 9 bzw. Brennstab 10 zum gitterförmigen Abstandhalter sorgen.

An einer Kreuzungsstelle 26 eines Steges 23 und eines Steges 24 weist der Steg 23 beiderseits des Steges 24 je eine räumlich gekrümmte, in Kühlmittelströmrichtung sich verjüngend zulaufende Schaufel 27 und 28 auf. An einer benachbarten Kreuzungsstelle 29 weist der Steg 24 beiderseits des Steges 23 diese Schaufeln 27 und 28 auf. Diese Schaufeln 27 und 28 wachsen allmählich aus der Kante des betreffenden Steges in Richtung auf den kreuzenden Steg heraus und haben, soweit sie an den Stegen 23 sitzen, eine Wölbung um eine zu diesen Stegen 23 parallele Richtung und, soweit sie an den Stegen 24 sitzen, eine Wölbung um eine zu diesen Stegen 24 parallele Richtung. Zur Ausbildung dieser Wölbung sind zwei Schaufeln 27 und 28, die sich an einer Kreuzungsstelle von Stegen 23 und 24 befinden, in verschiedene Richtung räumlich gekrümmt.

Ferner hat der Steg 24, auf dessen beiden Seiten sich in der Kreuzungsstelle 26 die beiden Schaufeln 27 und 28 des Steges 23 befinden, zwei Schaufeln 27 und 28, die gleich wie die Schaufeln 27 und 28 an der Kreuzungsstelle 26 ausgebildet sind. Diese Schaufeln 27 und 28 am Steg 24 sind in Richtung auf andere Maschen 25 gekrümmt als die Schaufeln 27 und 28 am Steg 23 an der Kreuzungsstelle 26.

Mit dem Pfeil A ist die Blickrichtung bezeichnet, in der die in Fig. 4 dargestellte Seitenansicht eines Steges mit zwei Schaufeln 27, 28 erscheint.

Entsprechendes gilt für den Steg 23 in Bezug auf die Kreuzungsstelle 26 benachbarte Nachbarkreuzungsstelle 29.

Die eine Kreuzungsstelle 26 bzw. 29 unmittelbar umgebenden vier Haltestäbe 9 bzw. Brennstäbe 10 bestimmen Strömungsunterkanäle 32, 33, in deren Zentrum sich die Kreuzungsstelle 26 bzw. 29 befindet.

Den in FIG 3 dargestellten gitterförmigen Abstandhalter senkrecht zur Zeichenebene von der Unterseite der Zeichenebene zur Oberseite der Zeichenebene durchströmendes Kühlmittel erhält in den Strömungsunterkanälen mit den Kreuzungsstellen der Stege 23 und 24 im Zentrum einen durch die Pfeile 30 und 31 charakterisierten Drall um das Zentrum dieser Strömungsunterkanäle. Obwohl praktisch kein Netto-Fluß in horizontaler Richtung zwischen den einzelnen Strömungsunterkanälen stattfindet, durchmischen sich die beiden Drallströmungen benachbarter Strömungsunterkanäle an ihren Grenzflächen etwas, was einen Temperaturausgleich fördert und den im benachbarten Strömungsunterkanal erzeugten Drall unterstützt.

Im oberen Teil des Brennelementes besteht das Kühlmittel aus einem Zweiphasengemisch aus Wasser und Dampf und dort angebrachte Schaufeln gewährleisten, daß das Wasser gegen die Außenflächen der Haltestäbe 9 und Brennstäbe 10 geschleudert wird und so einem Siedeübergang oder Dryout entgegenwirkt.

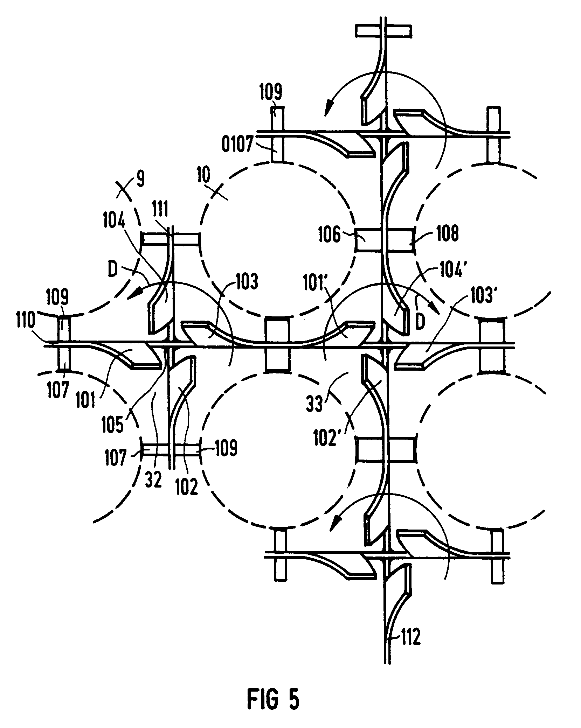

Bei dem Abstandhalter der Fig. 5 ist mit durchbrochenen Linien die Position der Brennstäbe 9 und 10 angedeutet, die die Strömungsunterkanäle 32 und 33 begrenzen. Hier sind in jedem dieser Strömungsunterkanäle vier Schaufeln 101, 102, 103, 104 bzw. 101′, 102′, 103′, 104′ vorgesehen. Die Schaufeln 101,... 104 sind dabei rotationssymmetrisch um die Mittellinie des Strömungskanals 32, d.h. der Schnittlinie des Längssteges 110 mit dem Quersteg 111, angeordnet, wo die beiden Stege auch miteinander durch Schweißpunkte 105 verbunden sind.

Mit 106 und 107 sind Noppen an den Stegen bezeichnet, gegen die die Brennstäbe 9 und 10 mittels gegenüberliegender Federn 108, 109 gedrückt werden, um den seitlichen Abstand zwischen den Brennstäben zu fixieren.

Während der Längssteg 110 die Schaufeln 101, 103 zu beiden Seiten des Schweißpunktes 105 trägt, die rotationssymmetrisch in Richtung des Pfeiles D angeordnet und gebogen sind, enthält in dem benachbarten Strömungsunterkanal 33 der den Längssteg 110 kreuzende Quersteg 112 entsprechende Schaufeln 102′ und 104′, die aber rotationssymmetrisch in der Gegenrichtung (Pfeil D′) angeordnet und gebogen sind. Die Pfeile D und D′ geben daher die Rotationsrichtung des Dralles im Unterkanal an.

Auch die gegenüber FIG 3 zusätzlich angebrachten Schaufeln 102, 104 bzw. 101′, 103′ ordnen sich diesen Rotationssymmetrien unter, die jeweils für alle Schaufeln eines Strömungsunterkanals gelten.

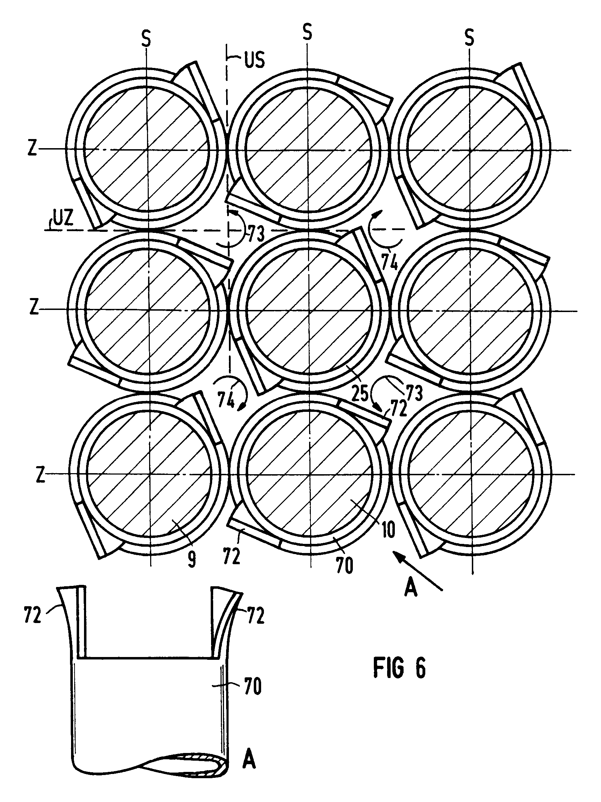

Beim gitterförmigen Abstandhalter nach FIG 6 befinden sich die Maschen 25 für die Haltestäbe 9 und die Brennstäbe 10 ebenfalls an Kreuzungsstellen von parallelen Längsreihen Z und zu diesen Zeilen orthogonalen parallelen Querreihen S. Die Längsreihen Z sind zueinander äquidistant, ebenso die Querreihen S. Ferner ist der Abstand zweier Querreihen gleich dem Abstand zweier Längsreihen.

Die Maschen 25 sind durch gleich hohe hohlzylinderförmige Hülsen 70 gebildet, die gleichen Innen- und Außenquerschnitt haben und in denen sich nicht dargestellte Anlagefedern und Anlagenoppen für einen Haltestab 9 bzw. Brennstab 10 befinden. Jede Hülse 70 ist mit dem Zentrum ihres Innenquerschnittes an einer Kreuzungsstelle einer Zeile Z und einer Spalte S angeordnet. Ein Ende aller Hülsen 70 befindet sich in einer Querschnittsebene des Brennelementkastens 3 und das andere Ende aller hülsen in einer zu dieser Querschnittsebene parallelen Querschnittsebene. Benachbarte Hülsen 70 berühren sich längs einer Mantellinie, an der sie miteinander verschweißt sind.

Jeweils eine Gruppe von vier in den Kreuzungsstellen von zwei benachbarten Zeilen Z und zwei benachbarten Spalten S angeordneten Hülsen 70 bilden einen zu diesen Hülsen 70 parallelen Strömungsunterkanal, der sich im Zentrum zwischen diesen vier Hülsen 70 befindet. Am dem Kühlmittelstrom abgewandten Ende dieser Hülsen 70 sind zwei sich in einem Hülsendurchmesser gegenüber befindliche Schaufeln 72 ausgebildet. An jeder Hülse 70 sind die beiden Schaufeln 72 in Bezug auf die Hülsenlängsachse im Hülsenzentrum rotationssymmetrisch. Sie laufen in Kühlmittelabströmrichtung sich verjüngend zu. Ferner sind sie räumlich jeweils in einen Strömungsunterkanal unter Ausbildung einer Wölbung hineingekrümmt. Die Schaufeln 72 an sich berührenden Hülsen 70 sind ferner entgegengesetzt rotationssymmetrisch jeweils bezüglich der Längsachse im Zentrum der betreffenden Hülse 70.

In jeden Strömungsunterkanal ragen jeweils zwei Schaufeln 72 hinein, die im Bezug auf eine zu den Hülsen 70 parallelen Zentralachse dieses Strömungsunterkanals rotationssymmetrisch sind.

Auf diese Weise sind die Schaufeln 72 in einem Strömungsunterkanal entgegengesetzt rotationssymmetrisch zu den Schaufeln in jedem weiteren Strömungsunterkanal, der sich zusammen mit dem Strömungsunterkanal und unmittelbar benachbart zu diesen in einer zu den Zeilen Z parallelen Zwischenzeile UZ oder in einer zu den Spalten S parallelen Zwischenspalte US befindet.

Ein von der Unterseite der Zeichenebene der FIG 6 orthogonal zur Zeichenebene zu deren Oberseite strömendes Kühlmittel erhält also in den Strömungsunterkanälen einen durch die Pfeile 73 bzw. 74 symbolisierten Drall. Jeder Drall in dem einen Unterkanal wirkt unterstützend auf den Drall in einem benachbarten Unterkanal, und im Kühlmittel enthaltene Wassertropfen werden wie beim gitterförmigen Abstandhalter nach FIG 3 nach außen gegen die Außenfläche der Haltestäbe 9 bzw. der Brennstäbe 10 geschleudert.

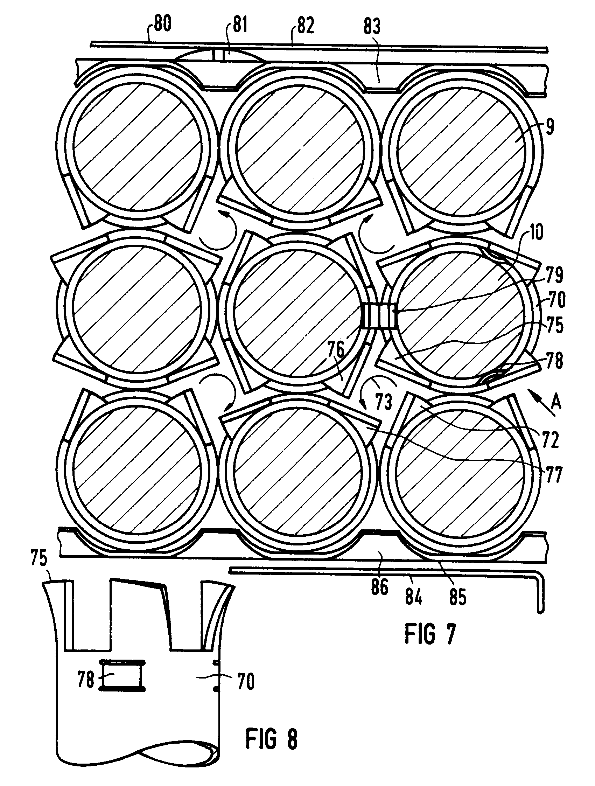

Obwohl der Druckverlust in der vertikalen Strömung wächst, je mehr Schaufeln in einem Unterkanal angeordnet sind und dessen Querschnitt verengen, ist auch hier vorteilhaft, vier Schaufeln 72, 75, 76, 77 in jedem Strömungskanal vorzusehen, deren rotationssymmetrische Anordnung und Form hier zu einem Abstandhalter nach FIG 7 führt.

Dabei ist durch den Pfeil A wiederum die Blickrichtung auf eine in FIG 8 gezeigte Hülse 70 bezeichnet. Ferner ist dabei erkennbar, daß durch Einbuchtungen 78 an den Hülsen Noppen 78 gebildet werden, gegen die die Brennstäbe 9, 10 durch Federn 79 gedrückt werden, die zwei benachbarte Hülsen umgreifen.

Ein Außensteg 80, der über Anlagenoppen 81 an den Seitenwänden 82 des Brennelementkastens anliegt, läuft am äußeren Rand des Abstandhalters entlang und trägt Laschen 83, die - genauso wie die Schaufeln in den Strömungsunterkanälen - sich auf der der Strömung abgewandten Seite des Abstandhalters befinden, in Strömungsrichtung sich verjüngen und gegenüber der Kastenwand geneigt sind.

Mit 84 ist die Wand eines Wasserrohres gezeigt, das in diesem Fall den Querschnitt von 3 x 3 Gittermaschen einnimmt und im Zentrum des Brennelementes sitzt. Ein Innensteg 85 mit entsprechenden Laschen 86 begrenzt den Abstandhalter gegenüber dem Wasserrohr 84.

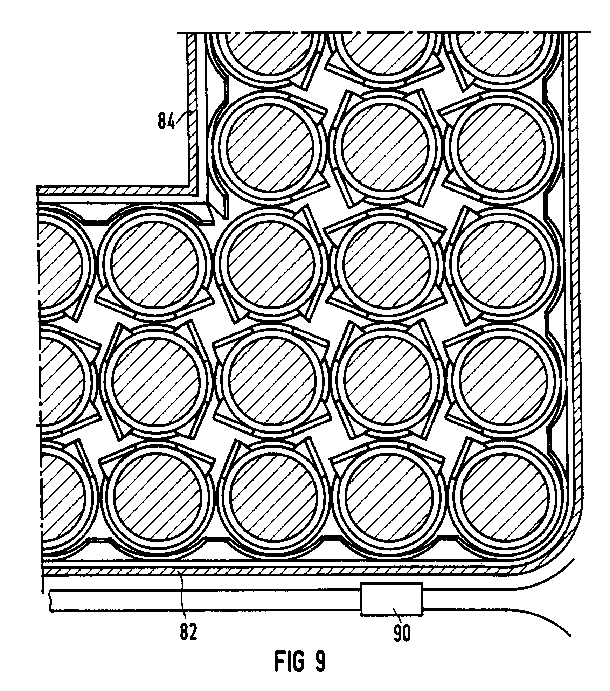

FIG 9 zeigt einen Detailquerschnitt einer entsprechenden Struktur, die zwischen dem Wasserrohr 84 und dem Brennelementkasten 82 angeordnet ist und zunächst nur als Träger für die Schaufeln in den Strömungsunterkanälen dient. Es handelt sich daher zunächst um ein Mischgitter, das aber durch entsprechende Feder/Noppen-Kombinationen auch jederzeit zu einem Abstandhalter ergänzt werden kann.

Dabei ist mit 90 ein steuerbares Absorberelement angedeutet. Derartige Absorberelemente befinden sich nur außerhalb des Brennelementkastens und sind daher von möglichen Horizontalströmungen des Flüssigkeit/Dampf-Gemisches durch die Kastenwände geschützt.

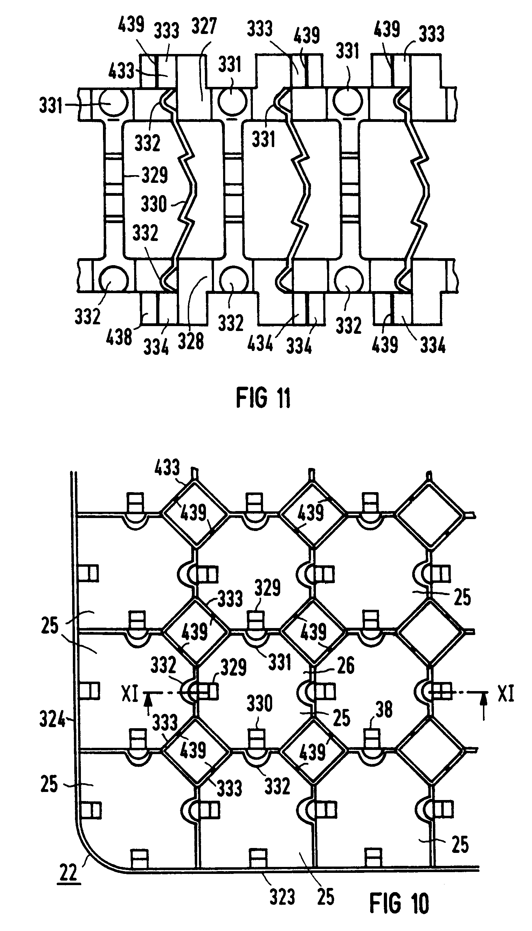

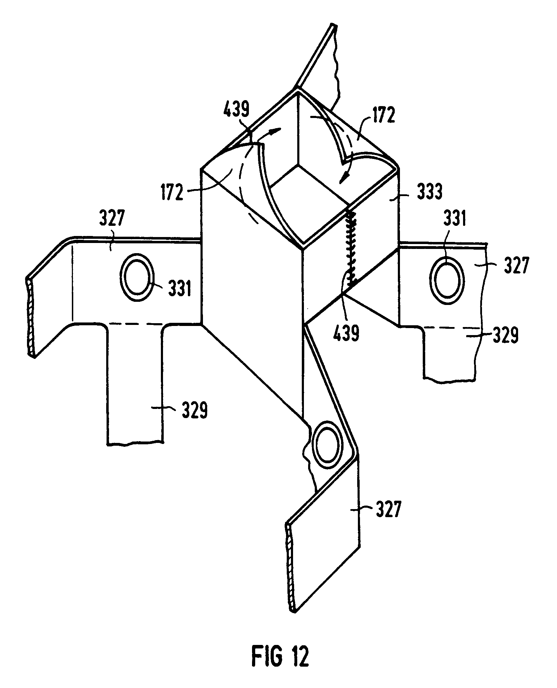

Der Abstandhalter nach den Figuren 10 bis 12 ist quadratisch und besteht ebenfalls aus einer Nickel-Chrom-Eisenlegierung. Es sind zwei flache, ebene Außenstege 323 und 324 zu erkennen, die hochkant rechtwinklig zueinander stehen und die an den Ecken des Abstandhalters 22 eine Abrundung bilden. Der Abstandhalter 22 hat ferner Gittermaschen 25, die sich wie die Felder eines Schachbrettes an dichten Zeilen und in zu diesen Zeilen rechtwinkligen Spalten angeordneten Positionen befinden. Durch die Gittermaschen 25 greift jeweils ein nicht dargestellter, Kernbrennstoff enthaltender Haltestab oder Brennstab des Kernreaktorbrennelementes 232, zu dem die Außenstege 23 und 24 rechtwinklig sind und dem diese Außenstege 323 und 324 flach zugewandt sind.

Innerhalb der Außenstege 323 und 324 des Abstandhalters 22 sind Paare miteinander fluchtender Haupthülsen 327 und 328, die im Abstandhalter 22 zueinander und zu den Brennstäben parallele Längsachsen haben, wie die Felder gleicher Farbe des Schachbrettes an den Positionen der Gittermaschen 25 in Zeilen und in zu diesen Zeilen rechtwinkligen Spalten jeweils unter Freilassung einer Zwischenposition zwischen zwei besetzten Positionen angeordnet.

Die Haupthülsen 327 und 328 aller Haupthülsenpaare des Abstandhalters 22 haben einen Querschnitt mit deckungsgleicher Außenkontur, die ein regelmäßiges Achteck ist. An zwei Seiten dieses Achtecks, die zu demselben Außensteg 323 oder 324 parallel sind, sind die Haupthülsen 327 und 328 mit Verbindungsstegen 329 und 330 versehen, die eine zu den Längsachsen der Haupthülsenpaare 327 und 328 parallele Richtung übergreifen. Diese Verbindungsstege 329 und 330 sind an den Haupthülsen 327 und 328 jeweils in der Mitte der Seite des die Außenkontur des Querschnittes bildenden regelmäßigen Achteckes angeformt und haben eine Breite, die etwa gleich ein Drittel der Länge der Seite dieses regelmäßigen Achteckes ist. Zwei an zueinander parallelen Seiten dieses Achteckes sitzende Verbindungsstege 329 und 330 sind in der Mitte jeweils in die gleiche Richtung gewölbt, d.h. ein Verbindungssteg 329 ist in Bezug auf die Haupthülsen 327 und 328 nach außen und ein Verbindungssteg 330 in Bezug auf die Haupthülsen 327 und 328 nach innen gewölbt. Ferner besitzen die Haupthülsen 327 und 328 in der Mitte der Seiten der ein regelmäßiges Achteck bildenden Außenkontur ihres Querschnittes auf der Haupthülsenwand eine starre Noppe 331 bzw. 332. Die starre Noppe 331 ist nach innen gerichtet, wenn der Verbindungssteg 329 an der Seite der Außenkontur in Bezug auf die Haupthülse 327 oder 328 nach außen gerichtet ist, und die starre Noppe 332 ist in Bezug auf die Haupthülse 327 oder 328 nach außen gerichtet, wenn der Verbindungssteg 330 in Bezug auf diese Haupthülse 327 oder 328 nach innen gerichtet ist.

Im Abstandhalter sind in Diagonalrichtung zwischen den Haupthülsen 327 und 328 Paare von miteinander fluchtenden Distanzhülsen 333 und 334 angeordnet, deren Querschnitt kleiner als der Querschnitt der Haupthülsen 327 und 328 ist und als Außenkontur ein Quadrat hat, dessen Seitenlänge gleich der Seitenlänge der ein regelmäßiges Achteck bildenden Außenkontur des Querschnittes der Haupthülsen 327 und 328 ist. Diese Distanzhülsen 333 und 334 befinden sich zwischen den Haupthülsen 327 bzw. 328 und sind jeweils aus zwei Distanzhülsenteilen 433 bzw. 434 gebildet, von denen jeweils eines an der Außenkante einer Haupthülse 327 bzw. 328 an der Seite der Außenkontur zwischen zwei Seiten mit Verbindungsstegen 329 bzw. 330 und Noppen 331 bzw. 332 angeformt ist. Jedes Distanzhülsenteil 433 bzw. 434 ist eine halbe Distanzhülse 333 bzw. 334 von zwei benachbarten Haupthülsen 327 bzw. 328. Diese halben Distanzhülsen 333 sind an Schweißstellen 439 bzw. 440 miteinander verschweißt. Die Haupthülsen 327 bilden zusammen mit denen an ihnen angeformten Distanzhülsen 333 ein erstes Teilgitter des Abstandhalters 22 und die Haupthülsen 328 zusammen mit den an ihnen angeschweißten Distanzhülsen 334 ein zweites, zu dem ersten Teilgitter paralleles Teilgitter, und die Distanzhülsen 333 und 334 sitzen jeweils auf der Außenseite dieser Teilgitter und bilden Zusatzhülsen im Strömungsunterkanal, der jeweils im Zentrum zwischen vier Haltestäben 9 bzw. Brennstäben 10 gebildet wird. Diese vier Haltestäbe 9 bzw. Brennstäbe 10 befinden sich jeweils in Maschen 26 des gitterförmigen Abstandhalters in zwei benachbarten Zeilen und zwei benachbarten Spalten.

Wie der Deutlichkeit halber nur in FIG 11 dargestellt ist, weist eine Distanzhülse 333 an der Kühlmittelabströmseite des gitterförmigen Abstandhalters nach den Figurn 4 und 5 an zwei sich gegenüber befindlichen, zueinander parallen Kühlmittelabströmkanten und damit an den Kühlmittelabströmenden der Haupthülse 327 zwei räumlich in den Strömungsunterkanal hineingekrümmte Schaufeln 172 auf, die in Kühlmittelabströmrichtung sich verjüngend zulaufen. Diese Schaufeln sind zu einer durch die Schnittpunkte der Diagonalen der Querschnitte der Distanzhülse 333 verlaufenden Zentralachse des Strömungsunterkanals rotationssymmetrisch.

Schaufeln an Distanzhülsen, die an Seiten der Haupthülsen 27 in durch diese Seiten bestimmte Unterzeilen und Unterspalten einer in FIG 6 dargestellten Distanzhülse 333 unmittelbar benachbart sind, tragen an den Kühlmittelabströmkanten Schaufeln, die entgegengesetzt rotationssymmetrisch zu den Schaufeln an der Distanzhülse 333 nach FIG 11 sind.

Auch hier ist es vorteilhaft, jede der dargestellten Schaufelpaare eines Strömungsunterkanals durch ein weiteres, der Rotationsrichtung im jeweiligen Strömungsunterkanal angepaßtes weiteres Schaufelpaar zu ergänzen. Die Nachteile, die der dadurch vergrößerte Strömungswiderstand mit sich bringt, können durch die Vorteile einer Verwirbelung des Flüssigkeit/Dampf-Gemisches überkompensiert werden.

## Patentansprüche

1. Siedewasserkernreaktor mit einem Druckbehälter (231) und einer an dem Druckbehälter angeschlossenen Dampfturbine (234) sowie mit mindestens einem in einem Reaktorkern im Druckbehälter befindlichen Kernreaktorbrennelement (232) und steuerbaren Absorberelementen (242), wobei
- das Kernbrennelement einen langgestreckten Brennelementkasten (3) mit das Kernbrennelement seitlich abschließenden, zueinander parallelen Seitenwänden, ein Eintrittsende für flüssiges Kühlmittel und ein Austrittsende für ein Flüssigkeit/Dampf-Gemisch des Kühlmittels und zu den Kastenwänden parallele, nebeneinander angeordnete, Kernbrennstoff enthaltende Brennstäbe (9, 10) enthält,
- die Absorberelemente (242) außerhalb des Brennelementes angeordnet sind, und
- die Brennstäbe in Längsreihen und die Längsreihen kreuzenden Querreihen derart angeordnet sind, daß sie durch Maschen eines praktisch senkrecht zu den Seitenwänden stehenden Gitters greifen und jeweils 4 Brennstäbe, die in zwei benachbarten Längsreihen und zwei benachbarten Querreihen stehen, einen zu den Seitenwänden parallelen Strömungsunterkanal (32, 33) für das Kühlmittel bilden,
**dadurch gekennzeichnet**, daß mindestens in mehreren dieser Strömungsunterkanäle (32, 33) jeweils mindestens zwei Schaufeln (27, 28) angebracht sind, die sich in Richtung Kühlmittelströmung verjüngen und gegenüber einer zu den Seitenwänden parallelen Mittelachse des Strömungsunterkanals räumlich derart gekrümmt sind, daß im Kühlmittel ein Drall (30, 31) um diese Mittelachse entsteht.

2. Siedewasserkernreaktor nach Anspruch 1, **dadurch gekennzeichnet**, daß in jedem dieser mehreren Strömungsunterkanäle vier um die Mittelachse praktisch rotationssymmetrische Schaufeln (101,102,103,104) angeordnet sind.

3. Siedewasserkernreaktor nach Anspruch 1 oder 2, **dadurch gekennzeichnet,** daß die Schaufeln (27,28,101,104) jeweils an der dem Kühlmittelstrom abgewandten Kante von das Gitter bildenden Stegen (23,24,110,111) angeordnet sind.

4. Siedewasserkernreaktor nach Anspruch 3, **dadurch gekennzeichnet,** daß die Stege Halteelemente (106,107,108,109) tragen, die den seitlichen Abstand zwischen den Brennstäben und den Seitenwänden fixieren.

5. Siedewasserkernreaktor nach Anspruch 1 oder einem der Ansprüche 2 bis 4, **dadurch gekennzeichnet,** daß in einem Strömungsunterkanal (32) jeweils alle Schaufeln (101,102,103,104) praktisch rotationssymmetrisch in einer Richtung um die Mittelachse angeordnet und geformt sind, und daß alle Schaufeln (101′,102′,103′,104′) in benachbarten Strömungsunterkanälen (33) praktisch rotationssymmetrisch in der anderen Richtung angeordnet und geformt sind.

6. Kernreaktorbrennelement eines nach einem der Ansprüche 1 bis 5 ausgebildeten Siedewasserkernreaktors, **dadurch gekennzeichnet**,
daß im Inneren des Kastens keine steuerbaren Absorberelemente angeordnet sind, daß die zu den Seitenwänden parallelen, Kernbrennstoff enthaltenden Brennstäbe jeweils durch eine Masche (25) eines Gitters geführt sind, das von zueinander parallelen Längsstegen (23) mit zu den Seitenwänden parallelen Seitenflächen und von die Längsstege kreuzenden Querstegen (24) mit zueinander parallelen Seitenflächen gebildet ist,
daß in den mehreren Strömungsunterkanälen jeweils an der Kreuzungsstelle zweier Stege (110, 111) der erste (110) der beiden Stege zwei Schaufeln (101, 103) trägt, die an seiner dem Kühlmittelstrom abgewandten Kante beiderseits des zweiten Steges (111) angeordnet sind und eine räumlich gekrümmte, in Richtung des Kühlmittelstroms sich verjüngende Form aufweisen, und
daß beide Schaufeln in verschiedene Richtungen gekrümmt sind.

7. Kernreaktorbrennelement nach Anspruch 6, **dadurch gekennzeichnet,** daß der den ersten Steg (110) kreuzende zweite Steg (111) an seiner dem Kühlmittelstrom abgewandten Kante zwei räumlich gekrümmte, sich in Strömungsrichtung verjüngende weitere Schaufeln (102, 104) aufweist,
daß sich jeweils eine der weiteren Schaufeln (102, 104) auf einer Seite des ersten Steges befindet (110) und daß zwischen der Kreuzungsstelle des ersten Steges (110) mit dem zweiten Steg (111) und jeweils einer der beiden weiteren Schaufeln (102, 104) sich keine Kreuzung des zweiten Steges (111) mit einem der anderen Stege befindet, und daß beide weiteren Schaufeln (102, 104) in Richtung auf andere Maschen als die Schaufeln (101, 103) an ersten Steg gekrümmt sind.

8. Kernreaktorbrennelement eines nach einem der Ansprüche 1 bis 5 ausgebildeten Kernreaktors, **dadurch gekennzeichnet,** daß in den Maschen (25) sitzence, zueinander parallele Hülsen (70) die Maschen des Gitters bilden und von den zueinander parallelen, kernbrennstoff enthaltenden Brennstäben durchsetzt werden, daß mindestens zwei von vier Hülsen (70), die von einen Strömungsunterkanal bildenden Brennstäben durchsetzt sind, an ihrem dem Kühlmittelstrom abgewandten Ende jeweils eine räumlich in den Strömungsunterkanal hineingekrümmte Schaufel (72) tragen, die in Richtung des Kühlmittelstroms sich verjüngt und daß die Schaufeln im Strömungsunterkanal sich diagonal gegenüberstehen, und bezüglich einer zu den Hülsen parallelen Mittelachse dieses Strömuncsunterkanals rotationssymmetrisch sind.

9. Kernreaktorbrennelement nach Anspruch 8, **dadurch gekennzeichnet**, daß die Schaufeln (172) an der dem Kühlmittelstrom abgewandten Seite einer Zusatzhülse (333) angeformt sind, die im Strömungsunterkanal parallel zu den Hülsen angeordnet ist.

## Claims

1. Boiling water reactor with a pressure vessel (231) and a steam turbine (234) connected to the pressure vessel and with at least one reactor fuel element (232) located in a reactor core in the pressure vessel and controllable absorber elements (242), whereby
- the nuclear fuel element contains an extended fuel-element box (3) having side walls parallel to one another and laterally sealing the nuclear fuel element, an inlet end for liquid coolant and an outlet end for a liquid/steam mixture of the coolant and fuel rods (9, 10) parallel to the box walls, arranged next to one another and containing nuclear fuel,
- the absorber elements (242) are arranged outside the fuel element, and
- the fuel rods are arranged in longitudinal rows and transverse rows, crossing the longitudinal rows, in such a way that they penetrate meshes of a grid which is practically perpendicular to the side walls, and in each case 4 fuel rods, which stand in two adjacent longitudinal rows and two adjacent transverse rows, form for the coolant a flow subchannel (32, 33) which is parallel to the side walls,
characterized in that in each case at least two vanes (27, 28) are fitted at least in several of these flow subchannels (32, 33), which vanes taper in the direction of the coolant flow and are spatially curved relative to a centre axis of the flow subchannel parallel to the side walls in such a way that in the coolant a swirl (30, 31) about this centre axis occurs.

2. Boiling water reactor according to claim 1, characterized in that in each of these several flow subchannels four vanes (101, 102, 103, 104) are arranged which are practically rotationally symmetrical about the centre axis.

3. Boiling water reactor according to claim 1 or 2, characterized in that the vanes (27, 28, 101-104) are in each case arranged at the edge of bars (23, 24, 110-111) forming the grid, the edge being directed away from the coolant flow.

4. Boiling water reactor according to claim 3, characterized in that the bars support retaining elements (106, 107, 108, 109) which fix the lateral spacing between the fuel rods and the side walls.

5. Boiling water reactor according to claim 1 or one of claims 2 to 4, characterized in that in a flow subchannel (32) in each case all vanes (101, 102, 103, 104) are arranged and formed practically rotationally symmetrically in one direction about the centre axis and in that all vanes (101′, 102′, 103′, 104′) in adjacent flow subchannels (33) are arranged and formed practically rotationally symmetrically in the other direction.

6. Reactor fuel element of a boiling water reactor constructed in accordance with one of claims 1 to 5, characterized in that no controllable absorber elements are arranged in the interior of the box, in that the fuel rods parallel to the side walls and containing nuclear fuel are in each case guided through a mesh (25) of a grid which is formed by longitudinal bars (23) parallel to one another with lateral surfaces parallel to the side walls and by transverse bars (24) crossing the longitudinal bars and having lateral surfaces parallel to one another, in that in the several flow subchannels in each case at the intersection of two bars (110, 111) the first (110) of the two bars supports two vanes (101, 103) which are arranged at its edge directed away from the coolant flow on both sides of the second bar (111) and have a spatially curved form which tapers in the direction of the coolant flow and in that both vanes are curved in different directions.

7. Reactor fuel element according to claim 6, characterized in that the second bar (111) crossing the first bar (110) has at its edge directed away from the coolant flow two spatially curved additional vanes (102, 104) tapering in the flow direction, in that in each case one of the additional vanes (102, 104) is located on one side of the first bar (110) and in that between the intersection of the first bar (110) with the second bar (111) and in each case one of the two additional vanes (102, 104) there is no crossing of the second bar (111) with one of the other bars and in that both additional vanes (102, 104) are curved in the direction of different meshes to the vanes (101, 103) at the first bar.

8. Reactor fuel element of a reactor constructed in accordance with one of claims 1 to 5, characterized in that fuel cans (70) disposed in the meshes (25) and parallel to one another form the meshes of the grid and are penetrated by the fuel rods which are parallel to one another and contain nuclear fuel, in that at least two of four fuel cans (70), which are penetrated by fuel rods forming a flow subchannel, support at their end directed away from the coolant flow in each case a vane (72) curved spatially into the flow subchannel, which vane tapers in the direction of the coolant flow and in that the vanes in the flow subchannel oppose one another diagonally and are rotationally symmetrical with respect to a centre axis of this flow subchannel which is parallel to the fuel cans.

9. Reactor fuel element according to claim 8, characterized in that the vanes (172) are integrally moulded to the side of an additional fuel can (333) which is directed away from the coolant flow, the additional fuel can being arranged in the flow subchannel parallel to the fuel cans.

## Revendications

1. Réacteur nucléaire à eau bouillante ayant une cuve sous pression (231) et une turbine à vapeur (234) raccordée à la cuve sous pression, ainsi qu'au moins un assemblage (232) combustible de réacteur nucléaire, qui se trouve dans un coeur de réacteur, dans la cuve sous pression et des éléments (242) absorbants pouvant être commandés,
- l'assemblage combustible comportant un boîtier-canal (3) oblong, qui a des parois latérales, parallèles les unes aux autres et qui ferme latéralement l'assemblage combustible, une extrémité d'entrée pour l'agent de refroidissement liquide et une extrémité de sortie pour un mélange liquide / vapeur de l'agent de refroidissement et des crayons (9,10) combustibles parallèles aux parois du boîtier-canal, montés les uns à côté des autres et contenant du combustible nucléaire,
- les éléments (242) absorbants étant montés hors de l'assemblage combustible et
- les crayons combustibles étant disposés en rangées longitudinales et en rangées transversales entrecroisées avec les rangées longitudinales en sorte qu'ils passent dans des mailles d'un réseau pratiquement perpendiculaire aux parois latérales et que 4 crayons combustibles qui sont dans deux rangées longitudinales, voisines et dans deux rangées transversales, voisines forment un sous-canal (32, 33) d'écoulement de l'agent de refroidissement, parallèle aux parois latérales,
caractérisé en ce que
il est monté, au moins dans plusieurs de ces sous-canaux (32, 33) d'écoulement, au moins deux ailettes (27, 28) qui se rétrécissent dans la direction du courant de l'agent de refroidissement et qui sont incurvées dans l'espace, par rapport à l'axe médian du sous-canal d'écoulement, parallèle aux parois latérales de manière à engendrer un tourbillonnement (30, 31) dans l'agent de refroidissement, autour de cet axe médian.

2. Réacteur nucléaire à eau bouillante suivant la revendication 1, caractérisé en ce que, dans chacun de ces sous-canaux d'écoulement, quatre ailettes (101, 102, 103, 104) pratiquement de révolution sont montées autour de l'axe médian.

3. Réacteur nucléaire à eau bouillante suivant les revendications 1 ou 2, caractérisé en ce que les ailettes (27, 28; 101 à 104) sont montées chacune sur le bord éloigné du courant de l'agent de refroidissement des parties pleines (23, 24; 110, 111) du réseau.

4. Réacteur nucléaire à eau bouillante suivant la revendication 3, caractérisé en ce que les parties pleines portent des éléments (106, 107, 108, 109) de maintien, qui maintiennent la distance latérale séparant les crayons combustibles et les parois latérales.

5. Réacteur nucléaire à eau bouillante suivant la revendication 1 ou l'une des revendications 2 à 4, caractérisé en ce que, dans un sous-canal (32) d'écoulement, toutes les ailettes (101, 102, 103, 104) sont montées et conformées, pratiquement de révolution, dans une direction autour de l'axe médian et en ce que, dans des sous-canaux voisins d'écoulement, toutes les ailettes (101′, 102′, 103′, 104′) sont montées et conformées, pratiquement de révolution, dans l'autre direction.

6. Assemblage combustible de réacteur nucléaire d'un réacteur nucléaire à eau bouillante constitué suivant l'une des revendications 1 à 5, caractérisé en ce que, à l'intérieur du boîtier canal, il n'est pas prévu d'éléments absorbants, pouvant être commandés, en ce que les crayons combustibles parallèles aux parois latérales et contenant du combustible passent chacun dans une maille (25) d'un réseau qui est formé par des parties pleines (23) longitudinales, parallèles les unes aux autres et ayant des faces latérales parallèles aux parois latérales et par des parties pleines (24) transversales, entrecroisées avec les parties pleines longitudinales et ayant des faces latérales parallèles les unes aux autres,
en ce que, dans les sous-canaux d'écoulement et au point d'intersection de deux parties pleines (110, 111), la première (110) des deux parties pleines porte deux ailettes (101, 103) qui sont montées, sur son bord éloigné du courantde l'agent de refroidissement, de part et d'autre de la deuxième partie pleine (111), qui sont de forme incurvée dans l'espace et, qui se rétrécissent dans la direction du courant de l'agent de refroidissement, et
en ce que les deux ailettes sont incurvées dans des directions différentes.

7. Assemblage combustible de réacteur nucléaire suivant la revendication 6, caractérisé en ce que la deuxième partie pleine (111), entrecroisée avec la première partie pleine (110) comporte, sur son bord éloigné du courant de l'agent de refroidissement, deux autres ailettes (102, 104), incurvées dans l'espace, et se rétrécissant dans la direction du courant de l'agent de refroidissement,
en ce que l'une des deux autres ailettes (102, 104) se trouve d'un côté de la première partie pleine (110) et en ce que, entre le point d'intersection de la première partie pleine (110) et de la deuxième partie pleine (111) et de l'une des deux autres ailettes (102, 104), il n'y a pas d'entrecroisement de la deuxième partie pleine (111) et de l'une des autres parties pleines, et en ce que les deux autres ailettes (102, 104) sont incurvées dans la direction d'autres mailles que les ailettes (101,103) sur la première partie pleine.

8. Assemblage combustible de réacteur nucléaire d'un réacteur nucléaire suivant l'une des revendications 1 à 5, caractérisé en ce que des gaines (70) de combustible se trouvant dans les mailles (25), parallèles les unes aux autres forment les mailles du réseau et sont traversées par les crayons combustibles, parallèles les uns aux autres et contenant du combustible, en ce que, au moins deux des quatres gaines (70) de combustible, qui sont traversées par des crayons combustibles formant un sous-canal d'écoulement, portent, sur leur extrémité éloignée du courant de l'agent de refroidissement, une ailette (72) qui est incurvée vers l'intérieur, dans l'espace, dans le sous-canal d'écoulement, qui se rétréçit dans la direction du courant de l'agent de refroidissement, et en ce que les ailettes, dans le sous-canal d'écoulement, se font face en diagonale et sont de révolution par rapport à un axe médian de ce sous-canal d'écoulement, cet axe médian étant parallèle aux gaines de combustible.

9. Assemblage combustible de réacteur nucléaire suivant la revendication 8, caractérisé en ce que les ailettes (172) sont du côté qui est éloigné du courant de l'agent de refroidissement, d'une gaine (333) supplémentaire de combustible qui est montée dans le sous-canal d'écoulement, parallèlement aux gaines de combustibles.
